# DEMANDE DE BREVET EUROPEEN

(11) **EP 4 803 406 A1**
(43) Date de publication de la demande: **09.09.2026**
(21) Numéro de dépôt: 26161808.6
(22) Date de dépôt: 03.03.2026
(51) Int. Cl.: B62D 25/08, B60R 19/02, B62D 27/06

(54) **STRUCTURE AVANT D'UN VÉHICULE AUTOMOBILE**

(30) Priorité: 03.03.2025 FR 2502125
(71) Demandeur: Flexis, 92100 Boulogne Billancourt (FR)
(72) Inventeur: BOURDET, Sébastien, 78280 GUYANCOURT (FR); DELORD, Christian, 78640 VILLIERS-SAINT-FREDERIC (FR)
(74) Mandataire: Lavoix

(57) **Abrégé**

L'invention concerne une structure avant de véhicule automobile, comportant : un longeron, comportant un flanc externe et une face supérieure (32) ; une traverse supérieure ; un radiateur ; et un agencement latéral comportant :
- un support de traverse (40), comprenant une partie intermédiaire (54) et une partie inférieure (56) ;
- un support secondaire (42), comprenant une zone inférieure (57) et une zone supérieure (58) ; la zone inférieure étant au contact du longeron ; la zone supérieure formant saillie au-dessus dudit longeron ;
- une fixation structurelle (46), comprenant une tige (66) traversant le flanc externe du longeron et la partie inférieure (56) du support de traverse ; et
- une fixation secondaire (48, 50), comprenant une deuxième tige (68) traversant la partie intermédiaire (54) du support de traverse et la zone supérieure (58) du support secondaire.

## Description

La présente invention concerne une structure avant de véhicule automobile, du type comportant : un premier longeron, s'étendant selon une direction longitudinale horizontale ; ledit premier longeron comportant : un flanc externe, sensiblement vertical ; et une face supérieure, sensiblement horizontale ; une traverse supérieure, s'étendant selon une direction transversale horizontale, perpendiculaire à la direction longitudinale ; et un radiateur, s'étendant sensiblement verticalement et sensiblement parallèlement à la direction transversale, une extrémité supérieure dudit radiateur étant fixée à la traverse supérieure.

Il est connu de fixer la traverse supérieure, supportant le radiateur, aux bords frontaux des extrémités avant des longerons. Cependant, certaines configurations des structures avant imposent d'installer des fixations au niveau des flancs latéraux desdits longerons pour ladite traverse supérieure.

Or, en cas d'impact subi par le véhicule, les longerons sont destinés à se comprimer pour absorber efficacement l'énergie du choc. La présence de fixations dans les flancs latéraux des longerons augmente localement leur rigidité, diminuant d'autant leur capacité à se comprimer.

La présente invention a pour but de proposer un assemblage efficace de la traverse supérieure et des flancs latéraux des longerons, sans impacter la compressibilité desdits longerons.

A cet effet, l'invention a pour objet une structure avant du type précité, comprenant en outre un premier agencement latéral, ledit premier agencement latéral comportant : un support de traverse, formé d'une plaque sensiblement verticale et sensiblement parallèle à la direction longitudinale ; ledit support de traverse comprenant une partie supérieure, une partie intermédiaire et une partie inférieure, formées d'une pièce et alignées selon la verticale ; une première extrémité de la traverse supérieure étant fixée à la partie supérieure dudit support de traverse ; un support secondaire, comprenant une première zone inférieure et une première zone supérieure, adjacentes l'une à l'autre selon la verticale ; la première zone inférieure étant fixée au contact du premier longeron ; la première zone supérieure formant saillie par rapport à la face supérieure dudit premier longeron ; une fixation structurelle, comprenant une première tige traversant à la fois le flanc externe du premier longeron et la partie inférieure du support de traverse ; et au moins une première fixation secondaire, comprenant une deuxième tige traversant à la fois la partie intermédiaire du support de traverse et la première zone supérieure du support secondaire.

Suivant d'autres aspects avantageux de l'invention, la structure avant comporte l'une ou plusieurs des caractéristiques suivantes, prises isolément ou suivant toutes les combinaisons techniquement possibles :
- la première zone inférieure du support secondaire est au contact de la partie inférieure du support de traverse ; et la première tige de la fixation structurelle traverse en outre ladite première zone inférieure du support secondaire ;
- la première zone inférieure du support secondaire est écartée de la partie inférieure du support de traverse selon la direction longitudinale ;
- le support secondaire comprend en outre une deuxième zone inférieure et une deuxième zone supérieure, adjacentes l'une à l'autre selon la verticale ; la deuxième zone inférieure étant fixée au contact du premier longeron ; la deuxième zone supérieure formant saillie par rapport à la face supérieure dudit premier longeron ; les deuxièmes zones inférieure et supérieure étant écartées des premières zones inférieure et supérieure selon la direction longitudinale ; et le premier agencement latéral comporte en outre une deuxième fixation secondaire, ladite deuxième fixation secondaire comprenant une troisième tige traversant à la fois la partie intermédiaire du support de traverse et la deuxième zone supérieure du support secondaire ;
- la fixation structurelle et les première et deuxième fixations secondaires forment un triangle non aplati ;
- les première et deuxième zones inférieures du support secondaire sont écartées d'une distance non nulle selon la direction longitudinale ;
- la fixation structurelle comprend : une vis comprenant la première tige et une tête élargie ; et un écrou apte à coopérer avec la vis, l'écrou étant amovible par rapport au premier longeron ;
- la structure avant comprend en outre : un second longeron, s'étendant selon la direction longitudinale ; ledit second longeron comportant : un flanc externe, sensiblement vertical ; et une face supérieure, sensiblement horizontale ; et un second agencement latéral, reliant de manière fixe une seconde extrémité de la traverse supérieure et le second longeron ;
- les premier et second agencements latéraux sont sensiblement symétriques l'un de l'autre par rapport à un plan médian de ladite structure avant, parallèle à la direction longitudinale.

L'invention se rapporte en outre à un véhicule automobile comprenant une structure avant telle que décrite ci-dessus.

L'invention apparaîtra plus clairement à la lecture de la description qui va suivre, donnée uniquement à titre d'exemple non limitatif, et faite en référence aux dessins dans lesquels :
- la figure 1 est une vue en perspective d'une structure avant de véhicule selon un mode de réalisation de l'invention ; et

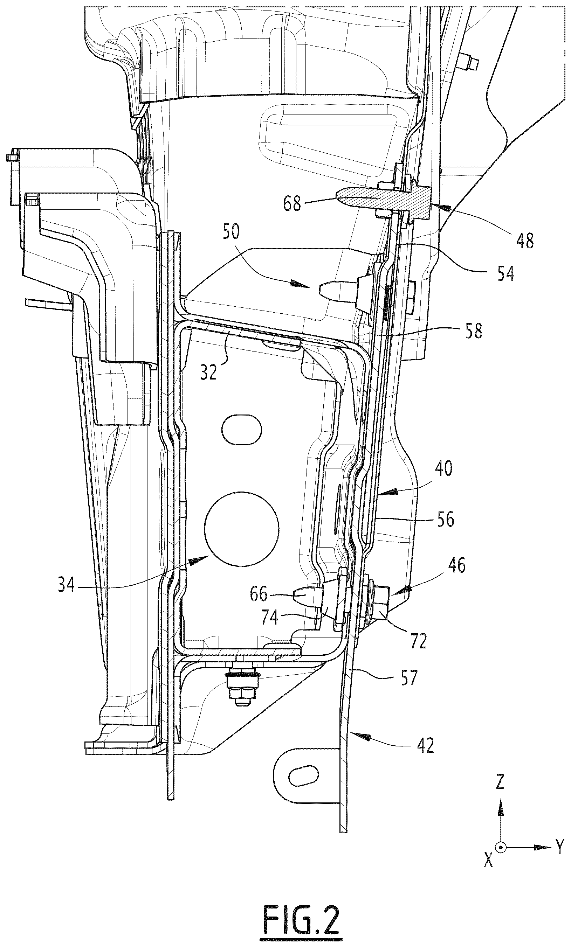

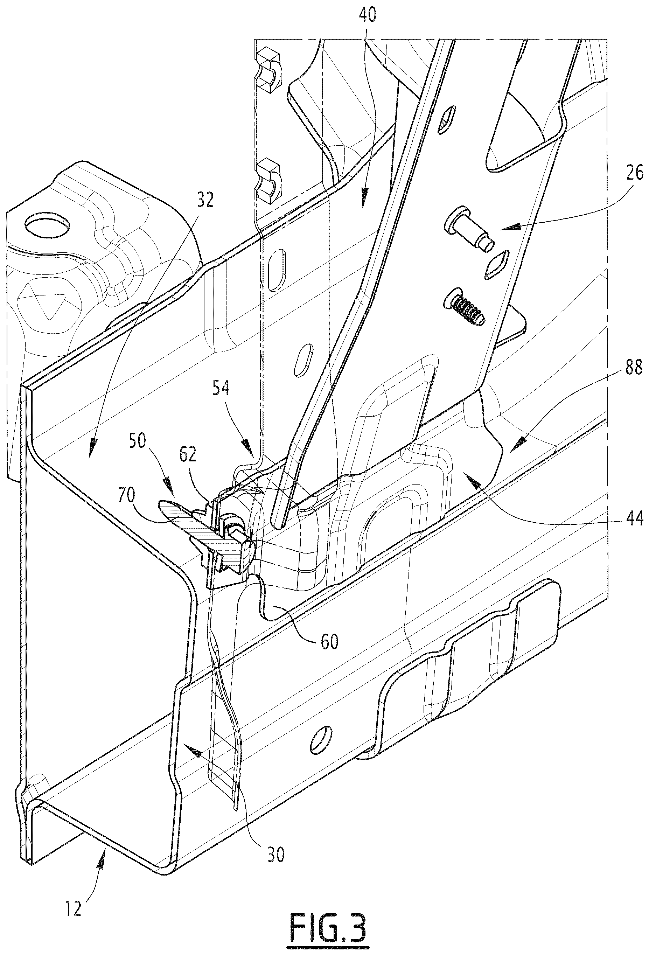

- les figures 2 et 3 sont des vues de détail, en coupe, de la structure avant de la figure 1.

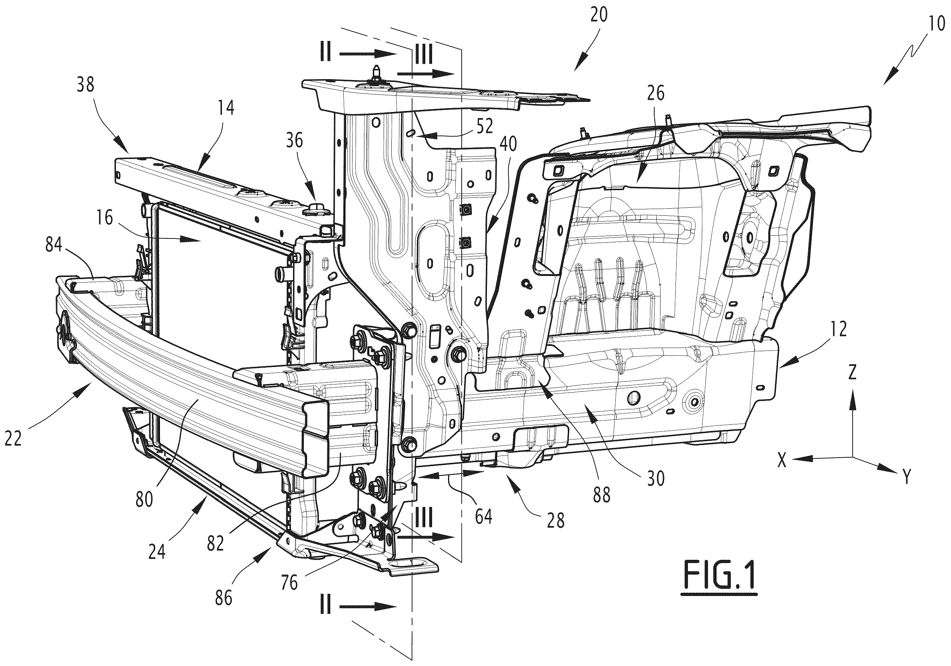

La figure 1 montre une structure avant 10 selon un mode de réalisation de l'invention. La structure avant 10 est notamment destinée à être intégrée à un véhicule automobile (non représenté).

La structure avant 10 comprend notamment : un premier longeron 12 ; une traverse supérieure 14 ; un radiateur 16 ; et un premier agencement latéral 20.

Dans le mode de réalisation représenté, la structure avant 10 comprend en outre : une traverse avant 22 ; une traverse inférieure 24 ; et une réhausse 26 de coupelle d'amortisseur.

Le premier longeron 12 s'étend selon une direction longitudinale X horizontale jusqu'à une extrémité avant 28. La direction longitudinale X correspond à une direction de déplacement du véhicule automobile.

Dans la suite de la description, on considère une base orthonormée (X, Y, Z) associée à la structure avant 10, la direction Z représentant la verticale. La direction Y est dite direction transversale.

Le premier longeron 12 comporte un flanc externe 30 et une face supérieure 32.

Chacun du flanc externe 30 et de la face supérieure 32 du premier longeron 12 est sensiblement plan et parallèle à la direction longitudinale X. Le flanc externe 30 est sensiblement vertical ; la face supérieure 32 est sensiblement horizontale.

Le premier longeron 12 présente une forme tubulaire, définie notamment par le flanc externe 30 et par la face supérieure 32. Ladite forme tubulaire confère une rigidité au premier longeron 12. Ladite forme tubulaire du premier longeron 12 délimite un espace interne 34.

La traverse supérieure 14 s'étend de manière sensiblement rectiligne selon la direction transversale Y, entre une première 36 et une seconde 38 extrémités.

Le radiateur 16 a une forme sensiblement plane, disposée selon un plan (Y, Z). Le radiateur 16 est disposé sous la traverse supérieure 14, une extrémité supérieure dudit radiateur 16 étant fixée à ladite traverse supérieure 14.

Le premier agencement latéral 20 sera décrit ultérieurement. Comme il sera détaillé ci-après, le premier agencement latéral 20 relie de manière fixe la première extrémité 36 de la traverse supérieure 14 à l'extrémité avant 28 du premier longeron 12.

De préférence, la structure avant 10 comprend en outre un second longeron et un second agencement latéral, non représentés. Dans la suite de la description, on considère que ledit second longeron et ledit second agencement latéral sont symétriques, respectivement du premier longeron 12 et du premier agencement latéral 20, par rapport à un plan médian (X, Z) de la structure avant 10 ; et que le second agencement latéral relie de manière fixe la seconde extrémité 38 de la traverse supérieure 14 à une extrémité avant du second longeron.

Le flanc externe 30 du premier longeron 12 est orienté à l'opposé dudit plan médian (X, Z).

Le premier agencement latéral 20 comporte : un support de traverse 40 ; au moins un support secondaire 42, 44 ; une fixation structurelle 46 ; et au moins une fixation secondaire 48, 50.

Plus précisément, dans le mode de réalisation représenté, le premier agencement latéral 20 comporte : un premier 42 et un deuxième 44 supports secondaires ; et une première 48 et une deuxième 50 fixations secondaires.

Le support de traverse 40 est formé d'une première plaque sensiblement disposée dans un plan (X, Z).

Ledit support de traverse 40 comprend une partie supérieure 52, une partie intermédiaire 54 et une partie inférieure 56, formées d'une pièce et alignées selon la verticale, la partie intermédiaire 54 étant disposée entre les parties supérieure 52 et inférieure 56. La première extrémité 36 de la traverse supérieure 14 est fixée au contact de la partie supérieure 52 du support de traverse 40.

Le premier support secondaire 42 comprend une première zone inférieure 57 et une première zone supérieure 58, formées d'une pièce et adjacentes l'une à l'autre selon la verticale. Dans le mode de réalisation représenté, le premier support secondaire 42 est formé d'une deuxième plaque, sensiblement disposée dans un plan (X, Z).

La première zone inférieure 57 du premier support secondaire 42 est fixée au contact du premier longeron 12, plus précisément fixée au contact du flanc externe 30 dudit premier longeron. La première zone supérieure 58 du premier support secondaire 42 forme une saillie verticale au-dessus de la face supérieure 32 dudit premier longeron.

Dans le mode de réalisation représenté, la première zone inférieure 57 du premier support secondaire 42 est prise en sandwich entre le flanc externe 30 du premier longeron 12 et la partie inférieure 56 du support de traverse 40.

Le deuxième support secondaire 44 comprend une deuxième zone inférieure 60 et une deuxième zone supérieure 62, formées d'une pièce et adjacentes l'une à l'autre selon la verticale. La deuxième zone inférieure 60 du deuxième support secondaire 44 est fixée au contact du premier longeron 12, plus précisément fixée au contact du flanc externe 30 dudit premier longeron. La deuxième zone supérieure 62 du deuxième support secondaire 44 forme une saillie verticale au-dessus de la face supérieure 32 dudit premier longeron.

Dans le mode de réalisation représenté, le deuxième support secondaire 44 est formé d'une troisième plaque, distincte de la deuxième plaque formant le premier support secondaire 42.

Les premier 42 et deuxième 44 supports secondaires sont à l'écart l'un de l'autre selon la direction longitudinale X. Plus précisément, le deuxième support secondaire 44 est situé en arrière par rapport au premier support secondaire 42.

Encore plus précisément, au niveau du flanc externe 30 du premier longeron 12, une distance 64 non nulle sépare les première 57 et deuxième 60 zones inférieures des premier 42 et deuxième 44 supports secondaires selon la direction longitudinale X.

La fixation structurelle 46 comprend une première tige 66, s'étendant selon Y et traversant à la fois le flanc externe 30 du premier longeron et la partie inférieure 56 du support de traverse 40. Dans le mode de réalisation représenté, la première tige 66 traverse en outre la première zone inférieure 57 du premier support secondaire 52, prise en sandwich entre ledit flanc externe 30 du premier longeron et ladite partie inférieure 56 du support de traverse.

La première fixation secondaire 48 comprend une deuxième tige 68, s'étendant selon Y et traversant à la fois la partie intermédiaire 54 du support de traverse et la première zone supérieure 58 du premier support secondaire 42.

En d'autres termes, la première fixation secondaire 48 est située plus haut selon Z que la fixation structurelle 46.

La deuxième fixation secondaire 50 comprend une troisième tige 70, s'étendant selon Y et traversant à la fois la partie intermédiaire 54 du support de traverse 40 et la deuxième zone supérieure 62 du deuxième support secondaire 44.

Dans le mode de réalisation représenté, la deuxième fixation secondaire 50 est située en arrière par rapport à la fixation structurelle 46 et à la première fixation secondaire 48 ; et la fixation structurelle 46 et les première 48 et deuxième 50 fixations secondaires forment un triangle non aplati. L'assemblage du support de traverse 40 au premier longeron 12 est ainsi renforcé.

Dans le mode de réalisation représenté, la tige 66, 68, 70 de chacune de la fixation structurelle 46 et des première 48 et deuxième 50 fixations secondaires est une tige filetée ; et chacune de la fixation structurelle 46 et des première 48 et deuxième 50 fixations secondaires comprend en outre : une tête 72 élargie, solidaire d'une extrémité de la tige 66, 68, 70 filetée correspondante pour former une vis ; et un écrou 74, apte à coopérer avec la tige 66, 68, 70 filetée correspondante.

Dans le mode de réalisation représenté, l'écrou 74 de la fixation structurelle 46 est disposé dans l'espace interne 34 du premier longeron 12.

De préférence, l'écrou 74 de la fixation structurelle 46 est amovible par rapport au flanc externe 30 du premier longeron 12. Plus précisément, l'écrou 74 de la fixation structurelle 46 est préférentiellement non soudé audit flanc externe 30.

Dans le mode de réalisation représenté, le premier support secondaire 42 est intégré à un renfort 76 de l'extrémité avant 28 du premier longeron 12. Plus précisément, ledit renfort 76 présente une section sensiblement en L dans un plan horizontal, une branche du L parallèle à X étant formée par le premier support secondaire 42.

Plus précisément, dans le mode de réalisation représenté, la traverse avant 22 de la structure avant 10 comprend : une portion principale 80, s'étendant sensiblement selon la direction transversale Y devant le radiateur 16 ; et un premier 82 et un second 84 bras, s'étendant selon X vers l'arrière, respectivement depuis une première et depuis une seconde extrémités de la portion principale 80. Une extrémité libre du premier bras 82 est assemblée à l'extrémité avant 28 du premier longeron 12 et au renfort 76.

Par ailleurs, dans le mode de réalisation représenté, la traverse inférieure 24 de la structure avant 10 est fixée à une extrémité inférieure du radiateur 16 et s'étend selon X entre une première 86 et une seconde extrémités. Ladite première extrémité 86 de la traverse inférieure 24 est fixée au renfort 76 de l'extrémité avant 28 du premier longeron 12.

Par ailleurs, dans le mode de réalisation représenté, le deuxième support secondaire 44 est intégré à un support 88 de réhausse de coupelle. Plus précisément, la réhausse 26 de coupelle de la structure avant 10 est fixé à la deuxième zone supérieure 62 du deuxième support secondaire 44.

Dans la configuration de la structure avant 10 décrite ci-dessus, bien que la fixation structurelle 46 et les première 48 et deuxième 50 fixations secondaires assemblent solidement le support de traverse 40 au reste de la structure, seule la première tige 66 de la fixation structurelle 46 traverse le premier longeron 12. A l'écart des premières 57 et deuxième 60 zones inférieures des premier 42 et deuxième 44 supports secondaires, l'avant du premier longeron 12 conserve ainsi une longueur compressible, notamment sur la distance 64 non nulle entre lesdits premier 42 et deuxième 44 supports secondaires.

L'écrou 74 non soudé de la fixation structurelle 46 contribue également à conserver la compressibilité de l'avant du premier longeron 12. La sécurité du véhicule automobile est ainsi améliorée.

La structure avant 10 décrite ci-dessus permet ainsi de fixer la traverse supérieure 14 au flanc externe 30 du longeron 12, en conservant la compressibilité dudit longeron en cas d'impact subi par le véhicule.

## Revendications

1. Structure avant (10) de véhicule automobile, comprenant :
- un premier longeron (12), s'étendant selon une direction longitudinale horizontale (X) ; ledit premier longeron comportant : un flanc externe (30), sensiblement vertical ; et une face supérieure (32), sensiblement horizontale ;
- une traverse supérieure (14), s'étendant selon une direction transversale horizontale (Y), perpendiculaire à la direction longitudinale ; et
- un radiateur (16), s'étendant sensiblement verticalement et sensiblement parallèlement à la direction transversale, une extrémité supérieure dudit radiateur étant fixée à la traverse supérieure (14) ;
la structure avant étant **caractérisée en ce qu'**elle comprend en outre un premier agencement latéral (20), ledit premier agencement latéral comportant :
- un support de traverse (40), formé d'une plaque sensiblement verticale et sensiblement parallèle à la direction longitudinale ; ledit support de traverse comprenant une partie supérieure (52), une partie intermédiaire (54) et une partie inférieure (56), formées d'une pièce et alignées selon la verticale ; une première extrémité (36) de la traverse supérieure (14) étant fixée à la partie supérieure (52) dudit support de traverse ;
- un support secondaire (42, 44), comprenant une première zone inférieure (57, 60) et une première zone supérieure (58, 62), adjacentes l'une à l'autre selon la verticale ; la première zone inférieure étant fixée au contact du premier longeron (12) ; la première zone supérieure formant saillie par rapport à la face supérieure (32) dudit premier longeron ;
- une fixation structurelle (46), comprenant une première tige (66) traversant à la fois le flanc externe (30) du premier longeron et la partie inférieure (56) du support de traverse (40) ; et
- au moins une première fixation secondaire (48, 50), comprenant une deuxième tige (68) traversant à la fois la partie intermédiaire (54) du support de traverse et la première zone supérieure (58, 62) du support secondaire (42, 44).

2. Structure avant selon la revendication 1, dans laquelle : la première zone inférieure (57) du support secondaire (42) est au contact de la partie inférieure (56) du support de traverse ; et la première tige (66) de la fixation structurelle (46) traverse en outre ladite première zone inférieure (57) du support secondaire.

3. Structure avant selon la revendication 1, dans laquelle la première zone inférieure (60) du support secondaire (44) est écartée de la partie inférieure (56) du support de traverse (40) selon la direction longitudinale.

4. Structure avant selon la revendication 2, dans laquelle :
- le support secondaire (42, 44) comprend en outre une deuxième zone inférieure (60) et une deuxième zone supérieure (62), adjacentes l'une à l'autre selon la verticale ; la deuxième zone inférieure (60) étant fixée au contact du premier longeron (12) ; la deuxième zone supérieure formant saillie par rapport à la face supérieure (32) dudit premier longeron ; les deuxièmes zones inférieure (60) et supérieure (62) étant écartées des premières zones inférieure (56) et supérieure (58) selon la direction longitudinale (X) ; et
- le premier agencement latéral (20) comporte en outre une deuxième fixation secondaire (50), ladite deuxième fixation secondaire comprenant une troisième tige traversant à la fois la partie intermédiaire (54) du support de traverse et la deuxième zone supérieure (62) du support secondaire.

5. Structure avant selon la revendication 4, dans laquelle la fixation structurelle (46) et les première (48) et deuxième (50) fixations secondaires forment un triangle non aplati.

6. Structure avant selon la revendication 4 ou 5, dans laquelle les première (56) et deuxième (60) zones inférieures du support secondaire sont écartées d'une distance (64) non nulle selon la direction longitudinale (X).

7. Structure avant selon l'une des revendications précédentes, dans laquelle la fixation structurelle (46) comprend : une vis comprenant la première tige (66) et une tête (72) élargie ; et un écrou (74) apte à coopérer avec la vis, l'écrou étant amovible par rapport au premier longeron (12).

8. Structure avant (10) selon l'une des revendications précédentes, comprenant en outre :
- un second longeron, s'étendant selon la direction longitudinale (X) ; ledit second longeron comportant : un flanc externe, sensiblement vertical ; et une face supérieure, sensiblement horizontale ; et
- un second agencement latéral, reliant de manière fixe une seconde extrémité (38) de la traverse supérieure (14) et le second longeron.

9. Structure avant selon la revendication 8, dans laquelle les premier (20) et second agencements latéraux sont sensiblement symétriques l'un de l'autre par rapport à un plan médian (X, Z) de ladite structure avant, parallèle à la direction longitudinale (X).

10. Véhicule automobile comprenant une structure avant (10) selon l'une des revendications précédentes.
